# EUROPEAN PATENT APPLICATION

(11) **EP 4 269 540 A1**
(43) Date of publication of application: **01.11.2023**
(21) Application number: 21845083.1
(22) Date of filing: 22.12.2021
(51) Int. Cl.: C10J 3/52, C10J 3/48, C10J 3/46, C10J 3/10

(54) **INSTALLATION AND METHOD FOR THERMOCHEMICALLY CONVERTING A SOLID FUEL INTO A SYNTHESIS GAS**

(30) Priority: 24.12.2020 ES 202031299
(71) Applicant: Waste to Energy Advanced Solutions, S.L., 08013 Barcelona (ES)
(72) Inventor: PONCE CONTRERAS, Andrés Octavio, 08013 Barcelona (ES)
(74) Representative: Pons
(86) International application number: PCT/ES2021/070920
(87) International publication number: WO 2022/136718

(57) **Abstract**

The present invention can be included in the technical field of installations and/or methods for thermochemically converting at least one solid fuel into a synthesis gas (6) inside a bubbling fluid bed reactor (17), the installation and the method being configured to work with fuels such as biomass and waste such as wood chips, agricultural waste, meat meal, sewage sludge, plastics, recovered solid fuels and waste-derived fuels, especially fuels containing complex ashes and/or polluting elements such as chlorine and/or sulphur.

## Description

### OBJECT OF THE INVENTION

The present invention can be included in the technical field of installations and/or methods for thermochemically converting at least one solid fuel into a synthesis gas inside a bubbling fluid bed reactor. More particularly, the object of the present invention is a method and an installation configured to work with fuels such as biomass and waste such as wood chips, agricultural waste, meat meal, sewage sludge, plastics, recovered solid fuels and waste-derived fuels, especially fuels containing complex ashes and/or polluting elements such as chlorine and/or sulphur.

### BACKGROUND OF THE INVENTION

Gasification is a process of thermochemically transforming a solid fuel into a gaseous fuel, called synthesis gas or Syngas.

A fluidised bed or fluid bed is a physical phenomenon that occurs when an amount of a particulate solid substance (generally present in a containment vessel) is placed under suitable conditions to cause a solid/fluid mixture to behave like a fluid. This is generally accomplished by introducing a pressurised fluid through the particulate medium. This results in the medium having many properties and features of normal fluids, such as the ability to flow freely by gravity or to be pumped using fluid-type technologies.

The resulting phenomenon is called fluidisation. Fluidised beds are used for several purposes, such as fluidised bed reactors (types of chemical reactors), separation of solids, fluid catalytic cracking, fluidised bed combustion.

The fluid bed gasification process is known, focusing mainly on two types: bubbling and circulating.

The fluidised bed reactor is one wherein the gasifying agent keeps an inert and the biomass in suspension until the particles thereof gasify and become fly ash which is dragged by the corresponding current. A bubbling bed reactor behaves like a low viscosity effervescent liquid. In this manner, the shape of the bubbles is similar in both cases: the small ones are nearly spherical, elongated and deformed when they grow, and the larger ones are spherical with the shape of a stopper. In both cases, the slow rise of the small bubbles is observed, which becomes faster with the large ones, a series of bubbles being able to form larger bubbles by coalescence.

However, the processes and devices known in the state of the art have several problems such as not being able to use solid fuels with complex ash and other pollutants such as chlorine and sulphur. In addition, they do not have the ability to use small-size, low-density particles.

Likewise, the agglomeration and fusion of the ash in the bed of the reactor is a common problem in the state of the art.

The facilities and processes known in the state of the art have low carbon conversion, reach synthesis gas with a high amount of pollutants and/or are complicated to operate and control like gasifiers that have two reactors and need an external fuel to regulate the temperature between the two reactors.

### DESCRIPTION OF THE INVENTION

The present invention aims to solve some of the problems mentioned in the state of the art. More particularly, in a first aspect of the first invention a method for thermochemically converting at least one solid fuel into a synthesis gas inside a bubbling fluid bed reactor is described, wherein said method comprises, at least, the steps:
a.- injecting at least one air flow into the bed by means of an air injector at speeds comprised between 60 and 150 m/s;
b.- extracting bed material by means of a bed extraction tube located in an air distribution plate inside the bed of the reactor.

Preferably, the method comprises further injecting a steam flow and distributing the mixture with the air flow by means of high-speed air/steam injectors that introduce said mixture into the bed at speeds comprised between 60 and 150 m/s.

In a preferred embodiment, the method also comprises recirculating the bed material and reinjecting it into the reactor together with the solid fuel, at a ratio of at least 0.5 kg of bed material for every 3 kg of fuel.

The method may be provided with a cooling step, comprising cooling the bed material with bottom ash in at least one heat exchanger before mixing it with the solid fuel and reinjecting it into the reactor.

The method may be provided with a cooling step, comprising cleaning the fly ash from the bed material after cooling and before mixing it with the solid fuel and reinjecting it into the reactor.

More particularly, in a preferred embodiment, the synthesis gas outlet is passed through a particle separator and the ash with a high carbon content is separated by means of cyclones to increase its reactivity. Said ash with a high carbon content is mixed with the second bed material mentioned above.

Likewise, in a preferred embodiment, when reintroducing the bed and ash return to a lower area of the bed, this is done at a distance of less than 500 mm from an air distribution plate arranged inside the bed of the reactor.

In this way, a downstream of solids with a high carbon content is generated through the walls of the reactor and towards the area with the highest oxygen content, in addition to eliminating the problem of entrainment of carbon particles in the centre of the rising bubbles.

Preferably, the method further comprises extracting a second bed material at high temperature which is passed through a close coupled carbon loop wherein the second bed material is mixed with ash comprising a high carbon content and the outlet of bed and ash return is reintroduced into the reactor.

The steps described above increase the carbon concentration in the bed and decrease the changes in fuel composition, in addition to reducing temperature peaks. Particles separated from the synthesis gas by the cyclone are collected in the close coupled carbon loop and are reintroduced into the reactor, having been previously mixed with the second material of the bed to increase the reactivity, enabling the carbon to be oriented to the bottom of the bed and eliminating the possibility of char entrainment by air/gas bubbles. Under this method the reactions are attenuated and a synthesis gas that is much more stable compared to bubbling and circulating fluid beds is generated.

In addition, it enables the absorption of acid gases such as H2S inside the bed of the reactor and the close coupled carbon loop by the injection of sorbents at the high reactivity temperature.

The resulting gases from the close coupled carbon loop can be directed to the subsequent process of thermal oxidation of the synthesis gas, wherein they are used as an oxidising or dilution agent.

Alternatively, they can be used in subsequent thermal processes.

In a preferred embodiment, the method further comprises injecting into the close coupled carbon loop at least one gas or gas mixture selected from the list:
- air;
- steam;
- carbon dioxide; and
- nitrogen.

In a preferred embodiment, steam is injected as a fluidising agent and the heat required for the reactions is supplied to the bed by means of high-temperature exchange from one of the following sources:
a. heat from concentrating solar plants;
b. heat recovered in the cooling area of cement kilns,
c. heat recovered at the outlet of glass melting furnaces;
d. heat recovered at the outlet of billet furnaces;
e. heat recovered at the outlet of the steel and aluminium furnaces;
f. heat recovered in the high-temperature area of brick or tile tunnel kilns; and
g. heat recovered in ceramic kilns.

In addition, the method may further comprise heating the steam as the fluidising agent mentioned above to a temperature between 600° and 1000° by means of a high-temperature exchange from one of the sources mentioned.

In a second aspect of the invention, an installation capable of carrying out the aforementioned method is disclosed, wherein said installation at least comprises:
- a bubbling fluid bed reactor,
- elements adapted to channel an air flow and a steam flow and adapted to distribute the mixture by means of high-speed air/steam injectors adapted to introduce said mixture into the bed at speeds comprised between 60 and 150 m/s,
- an air distribution plate inside the bed of the reactor comprising an extraction tube configured to extract the bed material, recirculation elements and reinjection elements capable of reinjecting the bed material into the reactor together with the solid fuel, at a ratio of at least 0.5 kg of bed material for every 3 kg of fuel.

Preferably, the installation comprises a close coupled carbon loop and extraction elements to extract a second bed material at high temperature from the bed, which is passed through said close coupled carbon loop wherein the second bed material is mixed with ash comprising a high carbon content and the mixture outlet is reintroduced as bed and ash return into the reactor.

The installation can be equipped with an air distribution plate arranged less than 500 mm from the inlet of bed and ash return to the reactor.

Likewise, in a preferred embodiment, the installation is provided with a particle separator arranged at the outlet of synthesis gas and configured to, by means of cyclones, separate the ash with a high carbon content, wherein said ash is subsequently mixed with the second bed material in the close coupled carbon loop.

Likewise, the installation can be provided with a heat exchanger arranged at the outlet of the reactor and configured to cool the bed material with ash before mixing it with the solid fuel and reinjecting it into the reactor.

The extraction and treatment of the bed by continuous dimensional separation, as well as indirect contact cooling and reinjection with the fuel, enables the stable and efficient generation of synthesis gas, by favouring the penetration of the fuel into the oxidation area of the bed and eliminating agglomerations and obstructions in the feed system.

In a preferred embodiment, the installation comprises a cleaning device configured to clean the fly ash from the bed material after cooling and before mixing it with the solid fuel and reinjecting it into the reactor.

Preferably, the installation comprises one of the elements from the following list to heat the steam injected as a fluidising agent and/or the bed in a separate reactor to provide part or all of the heat required to maintain the gasification reactions:
a. concentrating solar plants;
b. cement kilns;
c. glass melting furnaces;
d. billet furnaces,
e. steel and aluminium furnaces;
f. brick or tile tunnel kilns;
g. ceramic kilns.

The installation and the described method have many advantages, such as the efficient use of complex fuels for energy recovery, generating a clean and stable synthesis gas for the demands of thermal, electric and fuel applications such as SNG and H2 Green, with a very high carbon conversion.

Likewise, it has the capacity to use reduced particle size or low-density fuels in bubbling fluid bed reactors, without temperature loss or agglomeration problems. More particularly, there are no bed agglomeration problems.

Likewise, it enables the use of any type of fuel, in minimum granulometry and densities.

In addition, it has a high carbon conversion compared to conventional bubbling beds, both bubbling and circulating, due to the integration of the close coupled carbon loop with the technical features described above.

It has low investment and operating cost due to the constructive and operational features of the installation and the method, and it does not have wear problems or high temperature points compared to circulating fluid beds.

It removes pollutants from the fuel before the final use of the synthesis gas.

It is easier to operate and control than two-reactor gasifiers, and without the need for an external fuel to regulate the temperature between the two reactors.

Likewise, it can be applied for the energy recovery and thermochemical transformation of:
- meat meal;
- wood;
- forest and/or agricultural waste;
- waste-derived fuels.

In addition, it can replace the fuels currently used in the following industries:
- cement,
- ceramic,
- steel,
- minerals,
- paper,
- aluminium.

### DESCRIPTION OF THE DRAWINGS

To complement the description that is being made and for the purpose of helping to better understand the features of the invention, according to a preferred practical exemplary embodiment thereof, a set of drawings is attached as an integral part of said description, wherein the following has been represented with an illustrative and nonlimiting character:

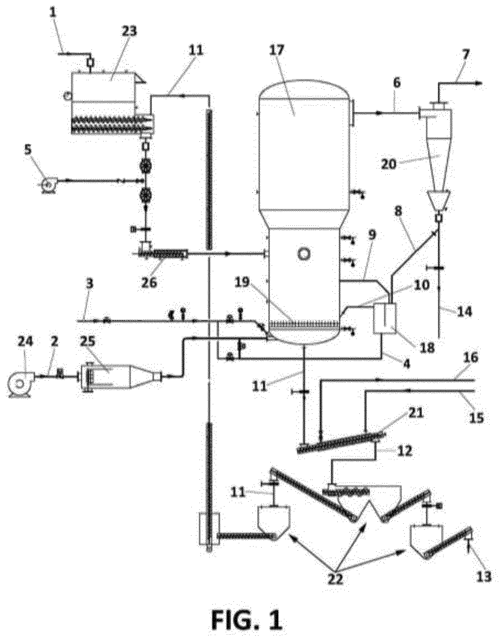

Figure 1 shows a schematic view, by way of example, of a preferred embodiment of the present invention, wherein the equipment that make up the installation and the flows that interact with said installation to carry out the proposed method are shown.

### PREFERRED EMBODIMENT OF THE INVENTION

A detailed description of a preferred exemplary embodiment of the method and the installation object of the present invention is provided below, with the aid of the attached Figure 1 described above.

More particularly, the object of the invention is a method and an installation for thermochemically converting at least one solid fuel (1) into a synthesis gas (6) inside a bubbling fluid bed reactor (17), wherein said method comprises, at least, the steps:
a.- injecting an air flow (2) and a steam flow (3) and distributing the mixture by means of high-speed air/steam injectors that introduce said mixture into the bed at speeds comprised between 60 and 150 m/s,
   - extracting bed material (11), recirculating it and re-injecting it into the reactor (17) together with the solid fuel (1), at a ratio of at least 1 kg of bed material (9) for every 3 kg of fuel (1).

As Figure 1 shows, the method further comprises extracting a second bed material (9) at high temperature that is passed through a close coupled carbon loop (18) wherein the second bed material (9) is mixed with ash (8) comprising a high carbon content and the outlet of bed and ash return (10) is reintroduced into the reactor (17).

In the preferred embodiment described by Figure 1, the outlet of synthesis gas (6) is passed through a particle separator (20) and the ash (8) with a high carbon content is separated by means of cyclones, which is subsequently mixed with the second bed material (9).

The reintroduction of the bed and ash return (10) is carried out in a lower area of the bed at a distance of less than 500 mm from an air distribution plate (19) arranged inside the bed of the reactor.

In this way, a downstream of high carbon solids is generated through the walls of the reactor (17), and towards the area with the highest oxygen content, in addition to eliminating the problem of entrainment of carbon particles in the centre of the rising bubbles.

In addition, in a preferred embodiment, the method comprises cooling the bed material (11) with ash in at least one heat exchanger (21) before mixing it with the solid fuel (1) and reinjecting it into the reactor (17).

As shown in Figure 1, the method envisages cleaning the bed material (11) with ash by means of a cleaning device (22) and after cooling and before mixing it with the solid fuel (1) to reinject it into the reactor (17).

In the preferred embodiment, the air flow (2) is injected through a fluidising air blower (24) and passes through a start burner (25).

Furthermore, in the described preferred embodiment, the solid fuel (1) is introduced into a feed hopper (23) before being mixed with the recirculated bed material (11).

Once the recirculated bed material (11) has been mixed with the solid fuel (1) after having passed through the feed hopper (23), pressurising air (5) is introduced into the circuit and passed through a gasifier (26) before entering the reactor (17).

## Claims

1. A method for thermochemically converting at least one solid fuel (1) into a synthesis gas (6) inside a bubbling fluid bed reactor (17), wherein said method comprises, at least, the steps:
a.- injecting at least one air flow (2) into the bed by means of an air injector at speeds comprised between 60 and 150 m/s;
- extracting bed material (11) by means of a bed extraction tube located in an air distribution plate (19) inside the bed of the reactor (17).

2. The method of claim 1, comprising further injecting a steam flow (3) and distributing the mixture with the air flow (2) by means of high-speed air/steam injectors that introduce said mixture into the bed at speeds comprised between 60 and 150 m/s.

3. The method of claim 1, comprising recirculating the bed material (11) and reinjecting it into the reactor (17) together with the solid fuel (1), at a ratio of at least 0.5 kg of bed material (9) for every 3 kg of fuel (1).

4. The method of claim 3, further comprising cooling the bed material (11) with bottom ash in at least one heat exchanger (21) before mixing it with the solid fuel (1) and reinjecting it into the reactor (17).

5. The method of claim 3, further comprising cleaning the fly ash from the bed material (11) after cooling and before mixing it with the solid fuel (1) and reinjecting it into the reactor (17).

6. The method of claim 1, further comprising extracting a second bed material (9) at high temperature that is passed through a close coupled carbon loop (18) wherein the second bed material (9) is mixed with ash (8) comprising a high carbon content and the outlet of bed and ash return (10) is reintroduced into the reactor (17).

7. The method of claim 6, wherein the outlet of synthesis gas (6) is passed through a particle separator (20) and the ash (8) with a high carbon content is separated by means of cyclones.

8. The method of claim 6, wherein introducing the bed and ash return (10) is carried out at a distance of less than 500 mm from the air distribution plate (19) inside the bed of the reactor (17).

9. The method of claim 6, wherein the resulting gases (4) from the close coupled carbon loop (18) are directed to the subsequent process of thermal oxidation of the synthesis gas (6), wherein they are used as an oxidising or dilution agent.

10. The method of claim 6, further comprising injecting into the close coupled carbon loop (18) at least one gas or gas mixture selected from the list:
- air;
- steam;
- carbon dioxide; and/or
- nitrogen.

11. The method according to any of the preceding claims, wherein steam is injected as a fluidising agent and the heat required for the reactions is supplied to the bed by means of a high-temperature exchange from one of the following:
a. heat from concentrating solar plants;
b. heat recovered in the cooling area of cement kilns,
c. heat recovered at the outlet of glass melting furnaces;
d. heat recovered at the outlet of billet furnaces;
e. heat recovered at the outlet of the steel and aluminium furnaces;
f. heat recovered in the high-temperature area of brick or tile tunnel kilns; and
g. heat recovered in ceramic kilns.

12. The method of claim 11, comprising heating the steam as a fluidising agent to a temperature between 600° and 1000° by means of a high-temperature exchange from one of the sources mentioned in the preceding claim.

13. An installation for carrying out the method of any one of the preceding claims, wherein said installation comprises:
- a bubbling fluid bed reactor (17),
- elements adapted to channel an air flow (2) and a steam flow (3) and adapted to distribute the mixture by means of high-speed air/steam injectors adapted to introduce said mixture into the bed at speeds comprised between 60 and 150 m/s,
- an air distribution plate (19) inside the reactor bed (11) comprising an extraction tube configured to extract the bed material (11), recirculation elements and reinjection elements capable of reinjecting the bed material (11) into the reactor (17) together with the solid fuel (1), at a ratio of at least 0.5 kg of bed material (9) for every 3 kg of fuel (1).

14. The installation of claim 13, comprising a close coupled carbon loop (18) and extraction elements to extract a second bed material (9) at high temperature that is passed through said close coupled carbon loop (18) wherein the second bed material (9) is mixed with ash (8) comprising a high carbon content and the outlet of bed and ash return (10) is reintroduced into the reactor (17).

15. The installation of claim 13, wherein the air distribution plate (19) is arranged less than 500 mm from the inlet of bed and ash return (10) to the reactor (17).

16. The installation of claim 13, comprising a particle separator (20) arranged at the outlet of synthesis gas (6) and configured to, by means of cyclones, separate the ash (8) with a high carbon content that mixes with the second bed material (9).

17. The installation of claim 13, comprising a heat exchanger (21) arranged at the outlet of the reactor (17) and configured to cool the bed material (11) with ash before mixing it with the solid fuel (1) and reinjecting it into the reactor (17).

18. The installation of claim 13, a cleaning device (23) configured to clean the fly ash from the bed material (11) after cooling and before mixing it with the solid fuel (1) and reinjecting it into the reactor (17).

19. The installation of claim 13, comprising one of the elements from the following list to heat the steam injected as a fluidising agent and/or the bed in a separate reactor to provide part or all of the heat required to maintain the gasification reactions:
a. concentrating solar plants;
b. cement kilns;
c. glass melting furnaces;
d. billet furnaces,
e. steel and aluminium furnaces;
f. brick or tile tunnel kilns;
g. ceramic kilns.
